# EUROPEAN PATENT SPECIFICATION

(11) **EP 4 560 576 B1**
(45) Date of publication and mention of the grant of the patent: **25.03.2026**
(21) Application number: 24170805.6
(22) Date of filing: 17.04.2024
(51) Int. Cl.: G06T 7/80, G06T 7/00

(54) **SYSTEM AND METHOD FOR CALIBRATING CAMERA**
SYSTEM UND VERFAHREN ZUR KALIBRIERUNG EINER KAMERA
SYSTÈME ET PROCÉDÉ D'ÉTALONNAGE DE CAMÉRA

(30) Priority: 24.11.2023 US 202318518631
(43) Date of publication of application: 28.05.2025
(73) Proprietor: HTC Corporation, Taoyuan City 330, (TW)
(72) Inventor: DING, Heng, 330 Taoyuan City (TW); HUANG, Chao-Shuan, 330 Taoyuan City (TW); PAN, Kuang-Yu, 330 Taoyuan City (TW)
(74) Representative: Carstens, Dirk Wilhelm

(56) References cited:
- US-A1- 2016 012 588
- RAMEAU FRANCOIS ET AL: "MC-Calib: A generic and robust calibration toolbox for multi-camera systems", COMPUTER VISION AND IMAGE UNDERSTANDING, ACADEMIC PRESS, US, vol. 217, 12 January 2022 (2022-01-12), XP086988601, ISSN: 1077-3142, [retrieved on 20220112], DOI: 10.1016/J.CVIU.2021.103353

## Description

### BACKGROUND

### Technical Field

The disclosure relates to computer vision technology, and particularly relates to a system and a method for calibrating a camera.

### Description of Related Art

Modern computer vision system implementation leverages camera (or camera array system) with wide field of view (FOV) to implement depth estimation and wide FOV, wherein the computer vision system relies on high precision intrinsic parameter and high precision extrinsic parameter of the camera. The intrinsic parameter and the extrinsic parameter can be calibrated by a known geometry (or physical dimension) calibration chart as ground truth.

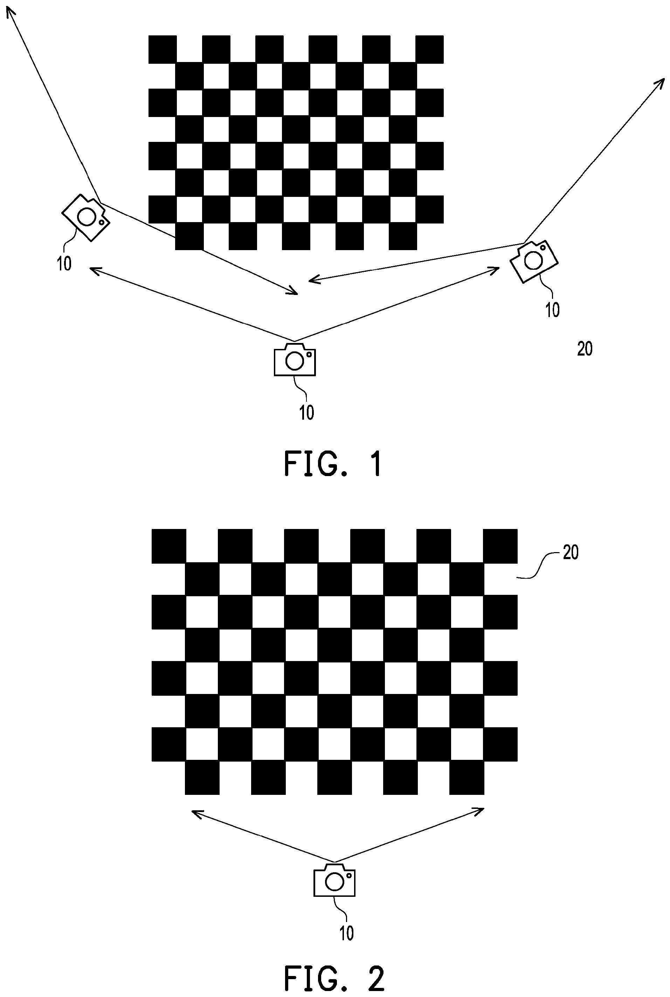

The intrinsic calibration needs to collect dataset (or chart images) fill whole camera FOV to estimate the coefficients include but not limited to principal point, distortion, and focal length of the camera, thus a camera for the intrinsic calibration needs to take a lot of pictures of a calibration chart in different view angles, as camera 10 shown in FIG. 1, or a huge calibration chart is needed for the intrinsic calibration, as calibration chart 20 shown in FIG. 2.

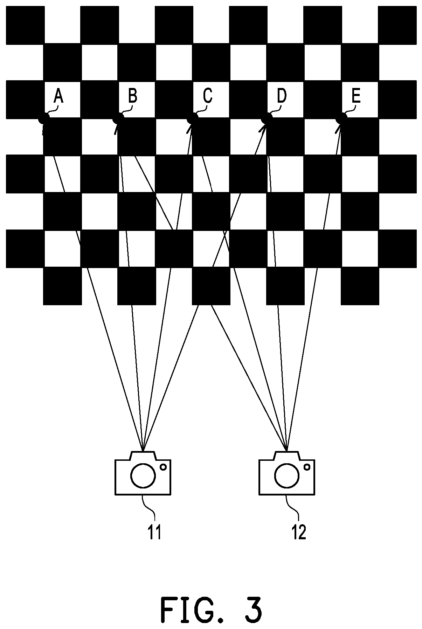

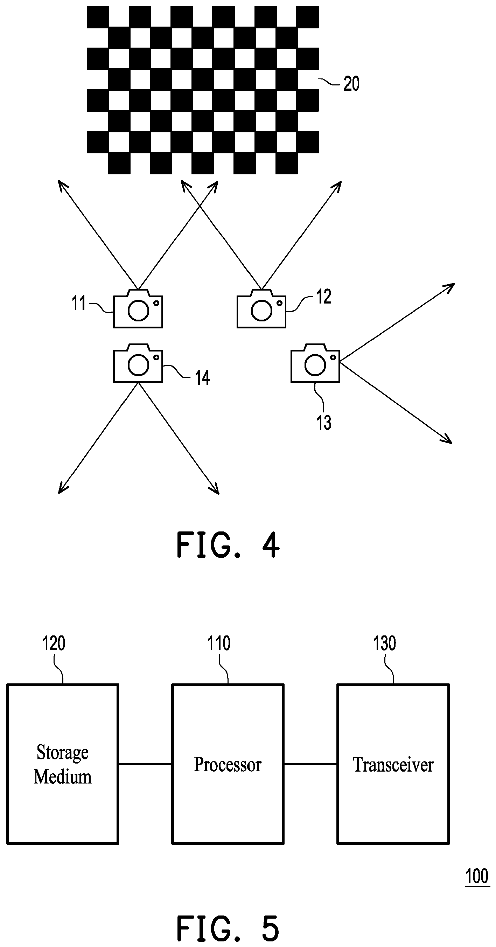

On the other hand, the extrinsic calibration relies on sharing coordinate system among cameras. In one embodiment shown in FIG. 3, when camera 11 observes points A, B, C, and D and camera 12 observes points B, C, D, and E of a flat calibration chart 20 , the pictures taken by the two cameras have overlap at points B, C, and D of the flat calibration chart 20. The extrinsic parameter between camera 11 and camera 12 may be calibrated according to the observation of points B, C, D to estimate two poses of camera 11 and camera 12 in the coordinate system associated with the flat calibration chart 20. However, for some wide FOV camera (or camera array), it is hard to retrieve overlap image by one flat calibration chart. As shown in FIG. 4, the calibration of camera array having camera 11, 12, 13, and 14 cannot be implemented just by the flat calibration chart 20.

FRANCOIS RAMEAU et al.: "MC-Calib: A generic and robust calibration toolbox for multi-camera systems", COMPUTER VISION AND IMAGE UNDERSTANDING; Academic Press, US, vol. 217, March 2022, ISSN: 1077-3142, discloses a toolbox dedicated to the calibration of complex synchronized multi-camera systems using an arbitrary number of fiducial marker-based patterns. Calibration results are obtained via successive stages of refinement to reliably estimate both the poses of the calibration boards and cameras in the system. The method is not constrained by the number of cameras, their overlapping field-of-view (FoV), or the number of calibration patterns used. Moreover, neither prior information about the camera system nor the positions of the checkerboards are required. Additionally, a new strategy is proposed for best-suited image selection and initial parameters estimation dedicated to non-overlapping FoV cameras.

### SUMMARY

The disclosure is directed to a system and a method for calibrating a camera.

The present disclosure is directed to a system for calibrating a camera, as set forth in claim 1.

The present disclosure is also directed to a method for calibrating a camera, as set forth in claim 9.

Preferred embodiments of the present invention may be gathered from the dependent claims.

To make the aforementioned more comprehensible, several embodiments accompanied with drawings are described in detail as follows,

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of taking pictures of a calibration chart.
FIG. 2 illustrates a schematic diagram of a calibration chart with a huge size.
FIG. 3 illustrates a schematic diagram of an extrinsic calibration for two cameras.
FIG. 4 illustrates a schematic diagram of an extrinsic calibration for a camera array.
FIG. 5 illustrates a schematic diagram of a system for calibrating a camera according to an embodiment of the present disclosure.
FIG. 6 illustrates a schematic diagram of generating a virtual calibration chart according to an embodiment of the present disclosure.
FIG. 7 illustrates a schematic diagram of calibrating a camera or a camera array according to an embodiment of the present disclosure.
FIG. 8 illustrates a flowchart of a method for calibrating a camera according to an embodiment of the present disclosure.

### DESCRIPTION OF THE EMBODIMENTS

FIG. 5 illustrates a schematic diagram of a system 100 for calibrating a camera according to an embodiment of the present disclosure. The system 100 includes a processor 110, a storage medium 120, and a transceiver 130. The processor 110 may be, for example, a central processing unit (CPU), or other programmable general purpose or special purpose micro control unit (MCU), a microprocessor, a digital signal processor (DSP), a programmable controller, an application specific integrated circuit (ASIC), a graphics unit (GPU), an arithmetic logic unit (ALU), a complex programmable logic device (CPLD), a field programmable gate array (FPGA), or other similar device or a combination of the above devices. The processor 110 is coupled to the storage medium 120 and the transceiver 130.

The storage medium 120 may be, for example, any type of fixed or removable random access memory (RAM), a read-only memory (ROM), a flash memory, a hard disk drive (HDD), a solid state drive (SSD) or similar element, or a combination thereof. The storage medium 120 may be a non-transitory computer readable storage medium configured to record a plurality of executable computer programs, modules, or applications to be loaded by the processor 110 to perform the function of the system 100.

The transceiver 130 may be configured to transmit or receive wired/wireless signals. The transceiver 130 may also perform operations such as low noise amplifying, impedance matching, frequency mixing, up or down frequency conversion, filtering, amplifying, and so forth. The processor 110 may communicate with other devices (e.g., a camera or a camera array) via the transceiver 130.

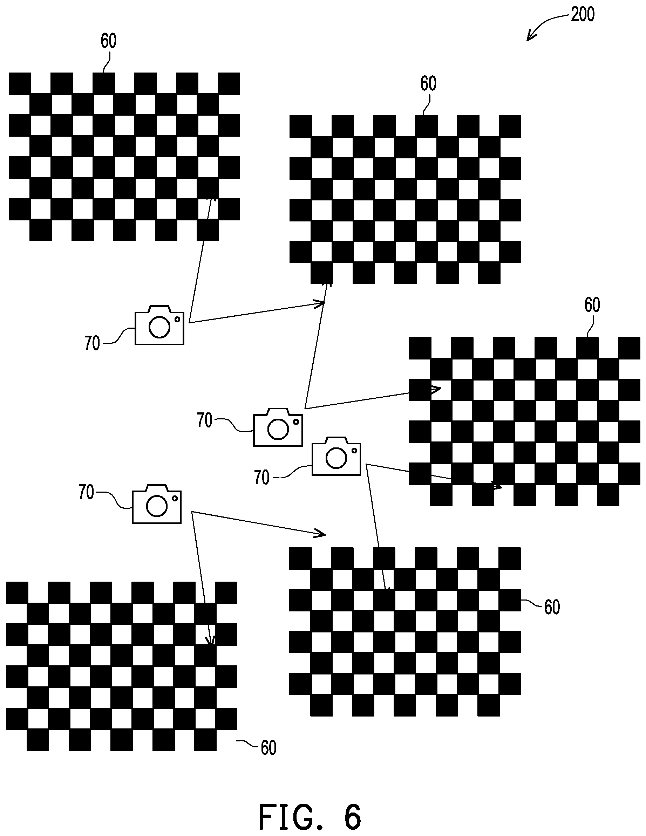

FIG. 6 illustrates a schematic diagram of generating a virtual calibration chart according to an embodiment of the present disclosure. A plurality of calibration charts 60 is spread in a calibration space 200. The camera 70 for generating the virtual calibration chart captures a plurality of images corresponding to the plurality of calibration charts 60 in high resolution. Each of the images includes at least a part of one or more calibration charts 60. In one embodiment, a distance between calibration charts 60 is less than the FOV of the camera 70 such that one or more images captured by the camera 70 may include more than one calibration chart 60. A pattern is disposed on each calibration chart 60, wherein the pattern may include one or more black grids or white grids. The pattern on each calibration chart 60 includes information of the calibration chart 60 such as the identity of the calibration chart 60. The system receives the plurality of images captured by the camera 70 through the transceiver 130. The plurality of images and the information of the plurality of calibration charts 60 (e.g., the location of the calibration chart 60, the pattern or grids on the calibration chart 60, the size of the calibration chart 60, or the identity of the calibration chart 60) are stored in the storage medium 120 of the system 100. For example, the processor 110 detects a pattern on a calibration chart 60 in an image and obtains the identity of the calibration chart 60 according to the detection result. In one embodiment, the information of the plurality of calibration charts 60 is received by the system 100 through the transceiver 130.

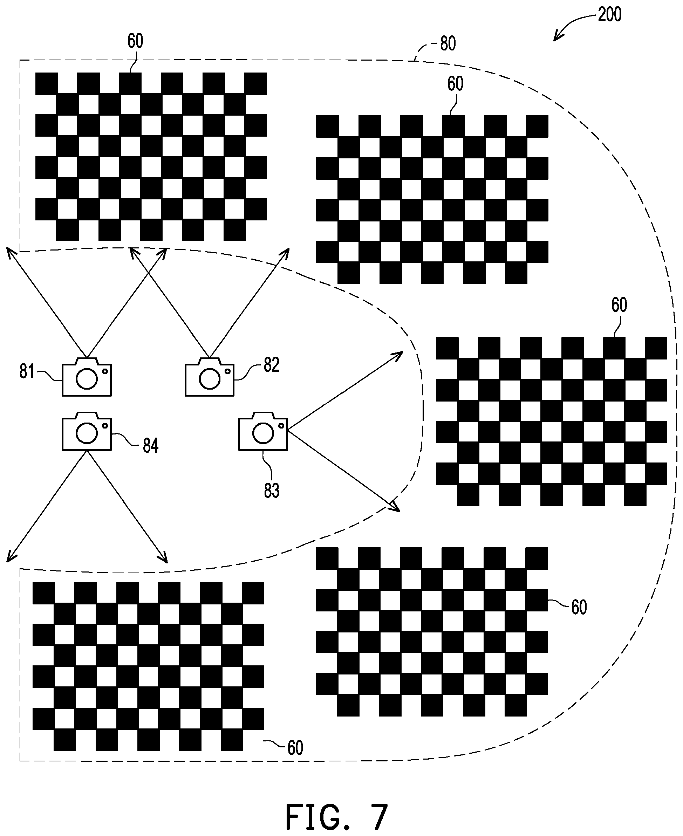

The processor 110 generates a virtual calibration chart (e.g., virtual calibration chart 80 as shown in FIG. 7) corresponding to the calibration space 200 according to the plurality of images and the information of the plurality of calibration charts 60, wherein the generated virtual calibration chart 80 may include information such as information of each calibration chart 60, a relative position of two calibration charts 60, or the interpolation of the plurality of calibration charts 60. In one embodiment, the processor 110 generates the virtual calibration chart 80 based on simultaneous localization and mapping (SLAM) algorithm.

FIG. 7 illustrates a schematic diagram of calibrating a camera or a camera array according to an embodiment of the present disclosure. The system 100 may calibrate one camera to be calibrated (e.g., cameras 81, 82, 83, or 84) according to the virtual calibration chart 80. For example, the user may capture, by the camera 81, one or more images of the virtual calibration chart 80 in the calibration space 200. The resolution of the camera to be calibrated (e.g., cameras 81, 82, 83, or 84) may be lower than, equal to, or greater than the resolution of the camera for generating the virtual calibration chart 80 (e.g., camera 70). Accordingly, the resolution of the image captured by the camera to be calibrated may be lower than the resolution of the image captured by the camera for generating the virtual calibration chart 80.

The system 100 receives one or more images captured by the camera 81, wherein at least one image includes at least a part of one or more calibration charts 60, wherein the multiple calibration charts 60 may be the same as or different from each other. The processor 110 detects the pattern on the calibration chart 60 in the image captured by the camera 81, so as to obtain information of the calibration chart 60 included in the image such as the identity of the calibration chart 60. After that, the processor 110 may calibrate intrinsic parameters of the camera 81 according to the image captured by the camera 81 and the virtual calibration chart 80 stored in the storage medium 120, wherein the image captured by the camera 81 may include information of one or more calibration charts 60 such as an identity of a calibration chart 60 included in the captured image. The intrinsic parameters of camera 81 calibrated by the processor 110 may include, for example, a focal length, an optical principal point, or distortion of the camera 81.

The system 100 may calibrate a plurality of cameras or a camera array in the same time according to the virtual calibration chart 80. For example, the user may capture, by the camera 82, one or more images of the virtual calibration chart 80 in the calibration space 200, and the user may capture, by the camera 83, one or more images of the virtual chart 80 in the calibration space 200. The system 100 may receive one or more images captured by the camera 82 and one or more images captured by the camera 83, wherein at least one image captured by the camera 82 (and camera 83) may include at least a part of one or more calibration charts 60. The calibration chart 60 captured by the camera 82 may be the same as or different from the calibration chart 60 captured by the camera 83. In other words, the FOVs of the cameras to be calibrated may be overlapped (e.g., FOVs of camera 81 and 82) or not overlapped (e.g., FOVs of camera 82 and 83) with each other.

After that, the processor 110 may calibrate intrinsic parameters or extrinsic parameters of the camera 82 and camera 83 according to the image captured by the camera 81, the image captured by the camera 82 and camera 83, and the virtual calibration chart 80, wherein the image captured by the camera 82 (or camera 83) may include information of one or more calibration charts 60 such as an identity of a calibration chart 60 included in the captured image. The intrinsic parameters of camera 82 (or camera 83) calibrated by the processor 110 may include, for example, a focal length, an optical principal point, or distortion of the camera 82 (or camera 83). The extrinsic parameters of cameras 82 and 83 calibrated by the processor 110 may include, for example, a relative position between camera 82 and camera 83 or the coordinate system of camera 82 and camera 83.

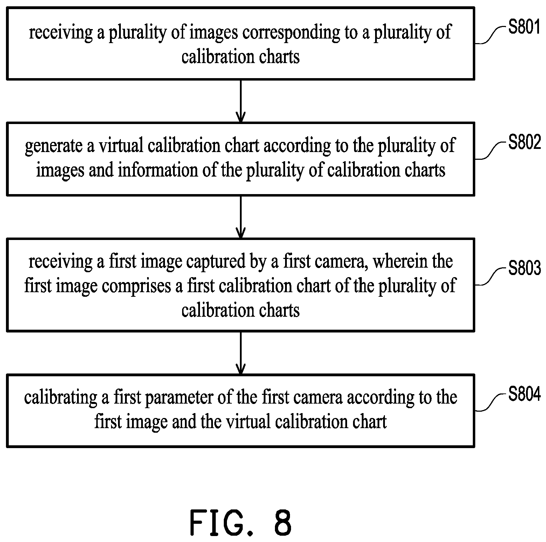

FIG. 8 illustrates a flowchart of a method for calibrating a camera according to an embodiment of the present disclosure, wherein the method may be implemented by the system 100 as shown in FIG. 5. In step S801, receiving a plurality of images corresponding to a plurality of calibration charts. In step S802, generate a virtual calibration chart according to the plurality of images and information of the plurality of calibration charts. In step S803, receiving a first image captured by a first camera, wherein the first image comprises a first calibration chart of the plurality of calibration charts. In step S804, calibrating a first parameter of the first camera according to the first image and the virtual calibration chart.

In summary, the system of the present disclosure stitches multiple calibration charts distributed in a specific space into a virtual calibration chart as calibration ground truth. After the virtual calibration chart being established, the user may take a picture of the virtual calibration chart by the camera (or camera array) to be calibrated. The system may calibrate the intrinsic parameters or extrinsic parameters of the camera (or camera array) according to the picture of the virtual calibration chart. Accordingly, the user of the camera with wide FOV may not need to prepare a huge calibration chart or may not need to take a lot of pictures of a calibration chart for calibrating the camera. Furthermore, calibration charts with any shapes may be used for the calibration. The calibration of the camera may be performed without high precision computer numerical control (CNC) engineering or unibody mechanical engineering. That is, the present disclosure provides a convenient way for calibrating a camera or a camera array.

It will be apparent to those skilled in the art that various modifications and variations can be made to the disclosed embodiments without departing from the scope of the following claims.

## Claims

1. A system for calibrating a camera (81, 82, 83, 84), comprising:
a storage medium (120), storing information of a plurality of calibration charts (60);
a transceiver (130); and
a processor (110), coupled to the storage medium (120) and the transceiver (130), wherein the processor (110) is configured to:
receive a plurality of images corresponding to the plurality of calibration charts (60), wherein a camera (70) for generating a virtual calibration chart captures the plurality of images corresponding to the plurality of calibration charts (60) in high resolution, wherein each of the images includes at least a part of one or more calibration charts (60), wherein a distance between calibration charts (60) is less than the field of view, FOV, of the camera (70) such that one or more images captured by the camera (70) includes more than one calibration chart (60), wherein a pattern is disposed on each calibration chart (60), wherein the pattern on each calibration chart (60) includes information of the calibration chart (60) such as the identity of the calibration chart (60), wherein the plurality of images captured by the camera (70) are received through the transceiver (130);
generate a virtual calibration chart (80) according to the plurality of images and the information, wherein the virtual calibration chart (80) is generated based on simultaneous localization and mapping algorithm, wherein the processor (110) detects a pattern on a calibration chart (60) in an image and obtains the identity of the calibration chart (60) according to the detection result, wherein the plurality of calibration charts (60) distributed in a specific calibration space (200) are stitched into the virtual calibration chart (80) as calibration ground truth, wherein the information of the plurality of calibration charts (60) is received through the transceiver (130);
receive a first image captured by a first camera (81), wherein the first image comprises a first calibration chart of the plurality of calibration charts (60);
detect a pattern on the first calibration chart (60) in the first image to obtain an identity of the first calibration chart (60), wherein the identity is associated with the information; and
calibrate a first parameter of the first camera (81) according to the first image, the virtual calibration chart (80), and the identity.

2. The system of claim 1, wherein the first parameter comprises an intrinsic parameter of the first camera (81).

3. The system of claim 1, wherein the processor (110) is further configured to:
receive a second image captured by a second camera (82), wherein the second camera (82) comprises a second calibration chart of the plurality of calibration charts (60);
detect a pattern on the second calibration chart (60) in the second image to obtain an identity of the second calibration chart (60), wherein the identity is associated with the information; and
calibrate the first parameter of the first camera (81) and a second parameter of the second camera (82) according to the first image, the second image, the virtual calibration chart (80) and the identity.

4. The system of claim 3, wherein the first parameter comprises an intrinsic parameter of the first camera (81) and an extrinsic parameter of the first camera (81).

5. The system of claim 3, wherein a first field of view, FOV, of the first camera (81) is not overlapped with a second field of view, FOV, of the second camera (82).

6. The system of claim 1, wherein the first image further comprises a second calibration chart of the plurality of calibration charts (60).

7. The system of claim 1, wherein the first calibration chart (60) comprises a black grid and a white grid.

8. The system of claim 1, wherein a first resolution of one of the plurality of images is greater than a second resolution of the first image.

9. A method for calibrating a camera (81, 82, 83, 84), comprising:
receiving (S801) a plurality of images corresponding to a plurality of calibration charts (60), wherein a camera (70) for generating a virtual calibration chart captures the plurality of images corresponding to the plurality of calibration charts (60) in high resolution, wherein each of the images includes at least a part of one or more calibration charts (60), wherein a distance between calibration charts (60) is less than the field of view, FOV, of the camera (70) such that one or more images captured by the camera (70) includes more than one calibration chart (60), wherein a pattern is disposed on each calibration chart (60), wherein the pattern on each calibration chart (60) includes information of the calibration chart (60) such as the identity of the calibration chart (60);
generating (S802) a virtual calibration chart (80) according to the plurality of images and information of the plurality of calibration charts (60), wherein the virtual calibration chart (80) is generated based on simultaneous localization and mapping algorithm, wherein a pattern on a calibration chart (60) in an image is detected and the identity of the calibration chart (60) is obtained according to the detection result, wherein the plurality of calibration charts (60) distributed in a specific calibration space (200) are stitched into the virtual calibration chart (80) as calibration ground truth;
receiving (S803) a first image captured by a first camera (81), wherein the first image comprises a first calibration chart of the plurality of calibration charts (60);
detecting a pattern on the first calibration chart (60) in the first image to obtain an identity of the first calibration chart (60), wherein the identity is associated with the information; and
calibrating (S804) a first parameter of the first camera (81) according to the first image, the virtual calibration chart (80), and the identity.

## Patentansprüche

1. System zum Kalibrieren einer Kamera (81, 82, 83, 84), aufweisend:
ein Speichermedium (120), das Informationen einer Vielzahl von Kalibrierungstabellen (60) speichert;
einen Transceiver (130); und
einen Prozessor (110), der mit dem Speichermedium (120) und dem Transceiver (130) gekoppelt ist, wobei der Prozessor (110) so konfiguriert ist zum:
Empfangen einer Vielzahl von Bildern, die der Vielzahl von Kalibrierungstabellen (60) entsprechen, wobei eine Kamera (70) zum Erzeugen einer virtuellen Kalibrierungstabelle die Vielzahl von Bildern, die der Vielzahl von Kalibrierungstabellen (60) entsprechen, in hoher Auflösung erfasst, wobei jedes der Bilder wenigstens einen Teil einer oder mehrerer Kalibrierungstabellen (60) enthält, wobei ein Abstand zwischen Kalibrierungstabellen (60) kleiner ist als das Sichtfeld, FOV, der Kamera (70) ist, so dass ein oder mehrere von der Kamera (70) erfasste Bilder mehr als eine Kalibrierungstabelle (60) umfassen, wobei auf jeder Kalibrierungstabelle (60) ein Muster angeordnet ist, wobei das Muster auf jeder Kalibrierungstabelle (60) Informationen der Kalibrierungstabelle (60), wie beispielsweise die Identität der Kalibrierungstabelle (60), enthält, wobei die Vielzahl der von der Kamera (70) aufgenommenen Bilder über den Transceiver (130) empfangen werden;
Erzeugen einer virtuellen Kalibrierungstabelle (80) gemäß der Vielzahl von Bildern und den Informationen, wobei die virtuelle Kalibrierungstabelle (80) auf der Grundlage eines Algorithmus zur simultanen Lokalisierung und Kartierung erzeugt wird, wobei der Prozessor (110) ein Muster auf einer Kalibrierungstabelle (60) in einem Bild erkennt und die Identität der Kalibrierungstabelle (60) entsprechend dem Erkennungsergebnis ermittelt, wobei die Vielzahl an Kalibrierungstabellen (60), die in einem bestimmten Kalibrierungsraum (200) verteilt sind, als Kalibrierungs-Grundwahrheit in die virtuelle Kalibrierungstabelle (80) eingefügt werden, wobei die Informationen der Vielzahl an Kalibrierungstabellen (60) über den Transceiver (130) empfangen werden;
Empfangen eines ersten Bildes, das von einer ersten Kamera (81) aufgenommen wurde, wobei das erste Bild eine erste Kalibrierungsvorlage der Vielzahl an Kalibrierungsvorlagen (60) aufweist;
Erkennen eines Musters auf der ersten Kalibrierungstabelle (60) im ersten Bild, um eine Identität der ersten Kalibrierungstabelle (60) zu erhalten, wobei die Identität mit den Informationen verknüpft ist; und
Kalibrieren eines ersten Parameters der ersten Kamera (81) gemäß dem ersten Bild, der virtuellen Kalibrierungstabelle (80) und der Identität.

2. System nach Anspruch 1, wobei der erste Parameter einen intrinsischen Parameter der ersten Kamera (81) aufweist.

3. System nach Anspruch 1, wobei der Prozessor (110) ferner konfiguriert ist zum:
Empfangen eines zweiten Bilds, das von einer zweiten Kamera (82) aufgenommen wurde, wobei die zweite Kamera (82) eine zweite Kalibrierungstabelle aus der Vielzahl von Kalibrierungstabellen (60) aufweist;
Erkennen eines Musters auf der zweiten Kalibrierungstabelle (60) im zweiten Bild, um eine Identität der zweiten Kalibrierungstabelle (60) zu erhalten, wobei die Identität mit den Informationen verknüpft ist; und
Kalibrieren des ersten Parameters der ersten Kamera (81) und eines zweiten Parameters der zweiten Kamera (82) nach dem ersten Bild, dem zweiten Bild, der virtuellen Kalibrierungstabelle (80) und der Identität.

4. System nach Anspruch 3, wobei der erste Parameter einen intrinsischen Parameter der ersten Kamera (81) und einen extrinsischen Parameter der ersten Kamera (81) aufweist.

5. System nach Anspruch 3, wobei ein erstes Sichtfeld, FOV, der ersten Kamera (81) nicht mit einem zweiten Sichtfeld, FOV, der zweiten Kamera (82) überlappt.

6. System nach Anspruch 1, wobei das erste Bild ferner eine zweite Kalibrierungstabelle aus der Vielzahl von Kalibrierungstabellen (60) aufweist.

7. System nach Anspruch 1, wobei die erste Kalibrierungstabelle (60) ein schwarzes Gitter und ein weißes Gitter aufweist.

8. System nach Anspruch 1, wobei eine erste Auflösung eines der zahlreichen Bilder größer ist als eine zweite Auflösung des ersten Bildes.

9. Verfahren zum Kalibrieren einer Kamera (81, 82, 83, 84), aufweisend:
Empfangen (S801) einer Vielzahl von Bildern, die einer Vielzahl von Kalibrierungstabellen (60) entsprechen, wobei eine Kamera (70) zum Erzeugen einer virtuellen Kalibrierungstabelle die Vielzahl von Bildern, die der Vielzahl von Kalibrierungstabellen (60) entsprechen, in hoher Auflösung aufnimmt, wobei jedes der Bilder wenigstens einen Teil einer oder mehrerer Kalibrierungstabellen (60) umfasst, wobei ein Abstand zwischen Kalibrierungstabellen (60) kleiner ist als das Sichtfeld, FOV, der Kamera (70), so dass ein oder mehrere von der Kamera (70) erfasste Bilder mehr als eine Kalibrierungstabelle (60) umfassen, wobei auf jeder Kalibrierungstabelle (60) ein Muster angeordnet ist, wobei das Muster auf jeder Kalibrierungstabelle (60) Informationen der Kalibrierungstabelle (60), wie beispielsweise die Identität der Kalibrierungstabelle (60), umfasst;
Erzeugen (S802) einer virtuellen Kalibrierungstabelle (80) gemäß der Vielzahl von Bildern und Informationen der Vielzahl von Kalibrierungstabellen (60), wobei die virtuelle Kalibrierungstabelle (80) auf der Grundlage eines Algorithmus zur simultanen Lokalisierung und Kartierung erzeugt wird, wobei ein Muster auf einer Kalibrierungstabelle (60) in einem Bild erkannt wird und die Identität der Kalibrierungstabelle (60) nach dem Erkennungsergebnis ermittelt wird, wobei die Vielzahl an Kalibrierungstabellen (60), die in einem bestimmten Kalibrierungsraum (200) verteilt sind, als Kalibrierungs-Grundwahrheit in die virtuelle Kalibrierungstabelle (80) eingefügt werden;
Empfangen (S803) eines ersten Bildes, das von einer ersten Kamera (81) aufgenommen wurde, wobei das erste Bild eine erste Kalibrierungstabelle der Vielzahl an Kalibrierungstabellen (60) aufweist;
Erfassen eines Musters auf der ersten Kalibrierungstabelle (60) im ersten Bild, um eine Identität der ersten Kalibrierungstabelle (60) zu erhalten, wobei die Identität mit den Informationen verknüpft ist; und
Kalibrieren (S804) eines ersten Parameters der ersten Kamera (81) nach dem ersten Bild, der virtuellen Kalibrierungstabelle (80) und der Identität.

## Revendications

1. Système pour calibrer une caméra (81, 82, 83, 84), comprenant :
un support de stockage (120), stockant des informations d'une pluralité de tableaux de calibrage (60) ;
un émetteur-récepteur (130) ; et
un processeur (110), couplé au support de stockage (120) et à l'émetteur-récepteur (130), dans lequel le processeur (110) est configuré pour :
recevoir une pluralité d'images correspondant à la pluralité de tableaux de calibrage (60), dans lequel une caméra (70) destinée à générer un tableau de calibrage virtuel capture la pluralité d'images correspondant à la pluralité de tableaux de calibrage (60) en haute résolution, dans lequel chacune des images comprend au moins une partie d'un ou plusieurs tableaux de calibrage (60), dans lequel une distance entre les tableaux de calibrage (60) est inférieure au champ de vision, FOV, de la caméra (70) de telle sorte qu'une ou plusieurs images capturées par la caméra (70) comprennent plus d'une carte de calibrage (60), dans lequel un motif est disposé sur chaque carte de calibrage (60), dans lequel le motif sur chaque carte de calibrage (60) comprend des informations de la carte de calibrage (60) telles que l'identité de la carte de calibrage (60), dans lequel la pluralité d'images capturées par la caméra (70) sont reçues par l'émetteur-récepteur (130) ;
générer une carte de calibrage virtuelle (80) en fonction de la pluralité d'images et des informations, dans lequel la carte de calibrage virtuelle (80) est générée sur la base d'un algorithme de localisation et de cartographie simultanées, dans lequel le processeur (110) détecte un motif sur une carte de calibrage (60) dans une image et obtient l'identité du tableau de calibrage (60) en fonction du résultat de la détection, dans lequel la pluralité de tableaux de calibrage (60) répartis dans un espace de calibrage spécifique (200) sont assemblés dans le tableau de calibrage virtuel (80) en tant que vérité terrain de calibrage, dans lequel les informations de la pluralité de tableaux de calibrage (60) sont reçues par l'intermédiaire de l'émetteur-récepteur (130) ;
recevoir une première image capturée par une première caméra (81), dans lequel la première image comprend une première carte de calibrage parmi la pluralité de cartes de calibrage (60) ;
détecter un motif sur la première carte de calibrage (60) dans la première image afin d'obtenir une identité de la première carte de calibrage (60), dans lequel l'identité est associée aux informations ; et
calibrer un premier paramètre de la première caméra (81) en fonction de la première image, de la carte de calibrage virtuelle (80) et de l'identité.

2. Système selon la revendication 1, dans lequel le premier paramètre comprend un paramètre intrinsèque de la première caméra (81).

3. Système selon la revendication 1, dans lequel le processeur (110) est en outre configuré pour :
recevoir une deuxième image capturée par une deuxième caméra (82), dans lequel la deuxième caméra (82) comprend une deuxième carte de calibrage parmi la pluralité de cartes de calibrage (60) ;
détecter un motif sur la deuxième carte de calibrage (60) dans la deuxième image afin d'obtenir une identité de la deuxième carte de calibrage (60), dans lequel l'identité est associée aux informations ; et
calibrer le premier paramètre de la première caméra (81) et un deuxième paramètre de la deuxième caméra (82) en fonction de la première image, de la deuxième image, de la carte de calibrage virtuelle (80) et de l'identité.

4. Système selon la revendication 3, dans lequel le premier paramètre comprend un paramètre intrinsèque de la première caméra (81) et un paramètre extrinsèque de la première caméra (81).

5. Système selon la revendication 3, dans lequel un premier champ de vision, FOV, de la première caméra (81) ne chevauche pas un deuxième champ de vision, FOV, de la deuxième caméra (82).

6. Système selon la revendication 1, dans lequel la première image comprend en outre une deuxième carte de calibrage parmi la pluralité de cartes de calibrage (60).

7. Système selon la revendication 1, dans lequel le premier tableau de calibrage (60) comprend une grille noire et une grille blanche.

8. Système selon la revendication 1, dans lequel une première résolution de l'une de la pluralité d'images est supérieure à une deuxième résolution de la première image.

9. Procédé pour calibrer une caméra (81, 82, 83, 84), comprenant :
la réception (S801) d'une pluralité d'images correspondant à une pluralité de cartes de calibrage (60), dans lequel une caméra (70) destinée à générer une carte de calibrage virtuelle capture la pluralité d'images correspondant à la pluralité de cartes de calibrage (60) en haute résolution, dans lequel chacune des images comprend au moins une partie d'une ou plusieurs cartes de calibrage (60), dans lequel une distance entre les cartes de calibrage (60) est inférieure au champ de vision, FOV, de la caméra (70) de telle sorte qu'une ou plusieurs images capturées par la caméra (70) comprennent plus d'une carte de calibrage (60), dans lequel un motif est disposé sur chaque carte de calibrage (60), dans lequel le motif sur chaque carte de calibrage (60) comprend des informations de la carte de calibrage (60) telles que l'identité de la carte de calibrage (60) ;
générer (S802) une carte de calibrage virtuelle (80) en fonction de la pluralité d'images et des informations de la pluralité de cartes de calibrage (60), dans lequel la carte de calibrage virtuelle (80) est générée sur la base d'un algorithme de localisation et de cartographie simultanées, dans lequel un motif sur une carte de calibrage (60) dans une image est détecté et l'identité de la carte de calibrage (60) est obtenue en fonction du résultat de la détection, dans lequel la pluralité de cartes de calibrage (60) réparties dans un espace de calibrage spécifique (200) sont assemblées dans la carte de calibrage virtuelle (80) en tant que référence de calibrage ;
recevoir (S803) une première image capturée par une première caméra (81), dans lequel la première image comprend une première carte de calibrage parmi la pluralité de cartes de calibrage (60) ;
détecter un motif sur la première carte de calibrage (60) dans la première image afin d'obtenir une identité de la première carte de calibrage (60), dans lequel l'identité est associée à l'information ; et
calibrer (S804) un premier paramètre de la première caméra (81) en fonction de la première image, de la carte de calibrage virtuelle (80) et de l'identité.
